# EUROPEAN PATENT SPECIFICATION

(11) **EP 3 816 465 B1**
(45) Date of publication and mention of the grant of the patent: **19.10.2022**
(21) Application number: 19205874.1
(22) Date of filing: 29.10.2019
(51) Int. Cl.: F16B 45/02

(54) **INSULATING CARABINER HOOK AND INSULATING GATE FOR CARABINER HOOK AND MANUFACTURING METHOD THEREOF**
ISOLIERENDER KARABINERHAKEN UND ISOLIERENDES GATE FÜR KARABINERHAKEN UND HERSTELLUNGSVERFAHREN DAFÜR
ISOLATION DE CROCHET DE MOUSQUETON ET GRILLE D'ISOLATION POUR CROCHET DE MOUSQUETON ET SON PROCÉDÉ DE FABRICATION

(43) Date of publication of application: 05.05.2021
(73) Proprietor: Yoke Industrial Corp., Taichung City 407 (TW)
(72) Inventor: HUNG, Wei-Chieh, 407 Taichung City (TW); WANG, Chia-Hsien, 509 Shengang Township, Changhua County (TW); CHENG, Ya-Chun, 530 Ershui Township, Changhua County (TW)
(74) Representative: Viering, Jentschura & Partner mbB Patent- und Rechtsanwälte

(56) References cited:
- EP-A1- 2 034 198
- EP-A2- 2 341 256
- JP-A- H07 229 510
- US-B1- 9 199 105

## Description

### BACKGROUND OF THE INVENTION

### Technical Field

The present invention is related to a carabiner hook, and more particularly to an insulating carabiner hook, an insulating gate for a carabiner hook, and a manufacturing method of the insulating gate.

### Description of Related Art

For workers working in elevated workplaces or for extreme sports players, seat belts and safety hooks have been widely used in related fields and have a direct impact on the life safety of these users.

For example, workers working in elevated workplaces (such as construction workers, electricians, glass cleaners of high building, etc.) must do specific work in the air for long periods of time, and must wear protective clothing according to safety rules (for example, safety helmets, safety belts, and safety hooks, etc. However, even the workers have worn the protective clothing in accordance with the safety rules, accidents that the workers fall occur at times.

In addition, extreme sports in recent years (such as bungee jumping, hang gliding, sky diving, etc.) have attracted many players to try such highly risky sports. However, in the news reports, the extreme sports players fall at times due to negligent inspection of the safety equipment, causing serious personal injury and even death.

Examining some of the reasons, the safety hooks of the protective clothing or the safety equipment are not properly locked according to the rules, so that the workers working in elevated workplaces and the extreme sports players fall due to the safety hook buckles are loosened.

Therefore, the conventional safety hook buckle still has room for improvements. EP 2 034 198 A1 discloses a carabiner hook, comprising: an body having a connecting portion and an abutting portion respectively located on two opposite ends of the body; an gate having a connecting end, a free end, and an external threaded section, wherein the external threaded section is located between the connecting end and the free end; the gate is pivotally connected to the connecting portion of the body via the connecting end, thereby the gate is pivotable to be pivot relative to the body; the free end is operable to be abutted against or away from the abutting portion of the body, and comprises a first section and a second section; the second section is located between the first section and the external threaded section; a color of the second section is different from a color of the first section; and a restricting sleeve having an internal threaded section and fitting around the gate, wherein the internal threaded section is screwed with the external threaded section of the gate; the restricting sleeve is operable to rotate, thereby the restricting sleeve is movable to be moved in an axial direction of the gate; wherein when the free end abuts against the abutting portion of the body, and the restricting sleeve completely covers the second section and covers at least a part of the abutting portion of the body, the restricting sleeve is defined as being located in a safe position, and at this time, the gate cannot freely pivot; when the free end abuts against the abutting portion of the body, and at least a part of the second section of the gate is exposed via the restricting sleeve, the restricting sleeve is defined as being located at a warning position. Another device is known from US 9 199 105 B1.

### BRIEF SUMMARY OF THE INVENTION

According to the present invention, an insulating gate for a carabiner hook as defined in claim 1 is provided. A method according to the present invention, is provided. The dependent claims show some examples of such an insulating gate and method, respectively.

In view of the above, the purpose of the present invention is to provide an insulating carabiner hook, wherein a user could easily identify whether the insulating carabiner hook is properly locked to be a safe state by different colors between a first insulating section and a second insulating section and by an easy security checking process, thereby to protect the safety of the user and enhance the convenience of use.

The present invention provides an insulating carabiner hook, including an insulating body, an insulating gate, and a restricting sleeve, wherein the insulating body has a connecting portion and an abutting portion respectively located on two opposite ends of the insulating body. The insulating gate has a connecting end, a free end, and an external threaded section, wherein the external threaded section is located between the connecting end and the free end. The insulating gate is pivotally connected to the connecting portion of the insulating body via the connecting end, thereby the insulating gate is pivotable to be pivot relative to the insulating body. The free end is operable to be abutted against or away from the abutting portion of the insulating body, and includes a first insulating section and a second insulating section. The second insulating section is located between the first insulating section and the external threaded section. A color of the second insulating section is different from a color of the first insulating section. The restricting sleeve has an internal threaded section and fitting around the insulating gate, wherein the internal threaded section is screwed with the external threaded section of the insulating gate; the restricting sleeve is operable to rotate, thereby the restricting sleeve is movable to be moved in an axial direction of the insulating gate. When the free end abuts against the abutting portion of the insulating body, and the restricting sleeve completely covers the second insulating section and covers at least a part of the abutting portion of the insulating body, the restricting sleeve is defined as being located in a safe position, and at this time, the insulating gate cannot freely pivot. When the free end abuts against the abutting portion of the insulating body, and at least a part of the second insulating section of the insulating gate is exposed via the restricting sleeve (30), the restricting sleeve (30) is defined as being located at a warning position.

In addition, the another primary objective of the present invention is to provide an insulating gate for a carabiner hook, including a core material, a first insulating layer, and a second insulating layer, wherein the core material comprises a free end and a connecting end. The first insulating layer is provided on a surface of the core material, and forms an external threaded section between the free end and the connecting end. The first insulating layer includes a first insulating section and a second insulating section on the free end. The second insulating section is located between the first insulating section and the external threaded section. A part of the core material corresponding to the first insulating section is coated with the first insulating layer, and a part of the core material corresponding to the second insulating section is partially coated with the first insulating layer. A part of the first insulating layer corresponding to the second insulating section is coated with the second insulating layer, and a part of the core material corresponding to the second insulating section is coated with the second insulating layer. A color of the second insulating section is different from a color of the first insulating section.

Moreover, the still another primary objective of the present invention is to provide a manufacturing method of an insulating gate for a carabiner hook, including steps of: provide a core material and a first mold, wherein the core material is disposed in a first mold cavity of the first mold, and has a first section, a second section, and a third section; the first mold cavity has a first area, a second area, and a third area; the first section is disposed within the first area; the second section is disposed within the second area; the third section is disposed within the third area; form a first molding space between the first section and an inner wall of the first area; form a second molding space between the second section and an inner wall of the second area; form a third molding space between the third section and an inner wall of the third area, wherein the second molding space communicates with the first molding space and the third molding space; inject a first insulating material into the first mold cavity, wherein the first insulating material fills the first molding space, the second molding space, and the third molding space, thereby to form a first insulating layer on a surface of the core material to obtain a semi-finished product; the semi-finished product has a first section, a second section, and a third section; when the semi-finished product is disposed in a second mold cavity of a second mold, the first section and the third section of the semi-finished product abut against an inner wall of the second mold cavity, and a fourth molding space is formed between the second section of the semi-finished product and the inner wall of the second mold cavity; inject a second insulating material into the fourth molding space, wherein the second insulating material fills the fourth molding space, thereby to form a second insulating layer on a part of a surface of the core material and a part of the first insulating layer corresponding to the second section of the semi-finished product to obtain the insulating gate.

With the different colors between the first insulating section and the second insulating section and with the easy security checking process, the user could easily identify whether the insulating carabiner hook is properly locked to be the safety state or not, thereby to protect the safety of the user and enhance the convenience of use. In addition, the entire outer surface of the insulating carabiner hook is coated with the insulating material, thereby to avoid electric shock or electric conduction occurring on the carabiner hook, providing further safety protection for electric maintenance staffs.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a perspective view of the insulating carabiner hook according to an embodiment of the present invention;
FIG. 2 is an exploded view, showing the components of the insulating carabiner hook according to the embodiment of the present invention shown in FIG. 1;
FIG. 3A is a schematic view, showing the core material of the insulating body of the insulating carabiner hook according to the embodiment of the present invention;
FIG. 3B is a schematic view, showing a part of the core material of the insulating body of the insulating carabiner hook according to the embodiment of the present invention is coated with the insulating layer;
FIG. 3C is a schematic view, showing another part of the core material of the insulating body of the insulating carabiner hook according to the embodiment of the present invention is coated with the insulating layer;
FIG. 4 is a flowchart of the manufacturing method of the insulating gate of the carabiner hook according to the embodiment of the present invention;
FIG. 5A is a schematic view, showing the core material of the insulating gate of the insulating carabiner hook according to the embodiment of the present invention;
FIG. 5B is a schematic view, showing a part of the core material of the insulating gate of the insulating carabiner hook according to the embodiment of the present invention is coated with the first insulating layer;
FIG. 5C is a schematic view, showing another part of the core material of the insulating gate of the insulating carabiner hook according to the embodiment of the present invention is coated with the second insulating layer;
FIG. 6A is a schematic view, showing the core material of the insulating gate is disposed in the first mold;
FIG. 6B is a sectional view along the 6B-6B line in FIG. 6A;
FIG. 7A is a schematic view, showing the semi-finished product of the insulating gate is disposed in the second mold;
FIG. 7B is a sectional view along the 7B-7B line in FIG. 7A;
FIG. 8A is a schematic view, showing the core material of the restricting sleeve of the insulating carabiner hook according to the embodiment of the present invention;
FIG. 8B is a schematic view, showing a part of the core material of the restricting sleeve of the insulating carabiner hook according to the embodiment of the present invention is coated with the first insulating layer of the restricting sleeve;
FIG. 8C is a schematic view, showing another part of the core material of the restricting sleeve of the insulating carabiner hook according to the embodiment of the present invention is coated with the second insulating layer of the restricting sleeve;
FIG. 9A is an exploded partial view of FIG. 1; and
FIG. 9B is a partially enlarged view of FIG. 9A.

### DETAILED DESCRIPTION OF THE INVENTION

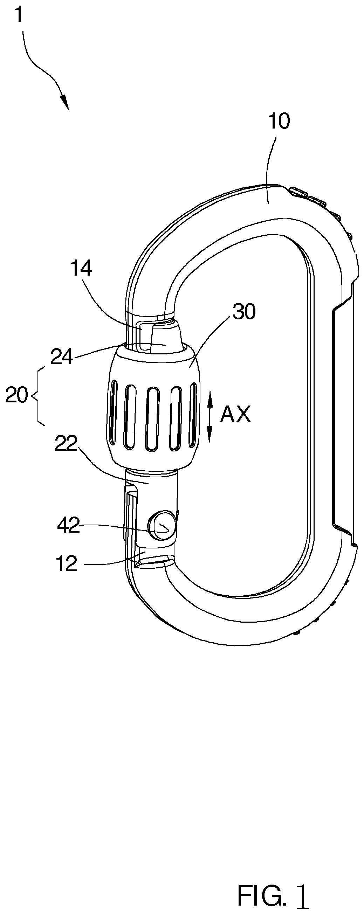

An insulating carabiner hook 1 according to an embodiment of the present invention is illustrated in FIG. 1, FIG. 2, and FIG. 9A, and includes an insulating body 10, an insulating gate 20, a restricting sleeve 30 which is insulated, and a pivot 40.

The insulating body 10 has a connecting portion 12 and an abutting portion 14 respectively located on two ends of the insulating body 10. The insulating gate 20 has a connecting end 22, a free end 24, and an external threaded section 26, wherein the external threaded section 26 is located between the connecting end 22 and the free end 24.

The insulating gate 20 is pivotally connected to the connecting portion 12 of the insulating body 10 via the connecting end 22, so that the insulating gate 20 could pivot relative to the insulating body 10. The free end 24 is operable to be abutted against or away from the abutting portion 14 of the insulating body 10, and includes a first insulating section 242 and a second insulating section 244, wherein the second insulating section 244 is located between the first insulating section 242 and the external threaded section 26. A color of the second insulating section 244 is different from a color of the first insulating section 242.

The restricting sleeve 30 fits around the insulating gate 20 and has an internal threaded section, wherein the internal threaded section is screwed with the external threaded section 26 of the insulating gate 20. The restricting sleeve 30 is operable to rotate, so that the restricting sleeve 30 could be moved in an axial direction AX of the insulating gate 20.

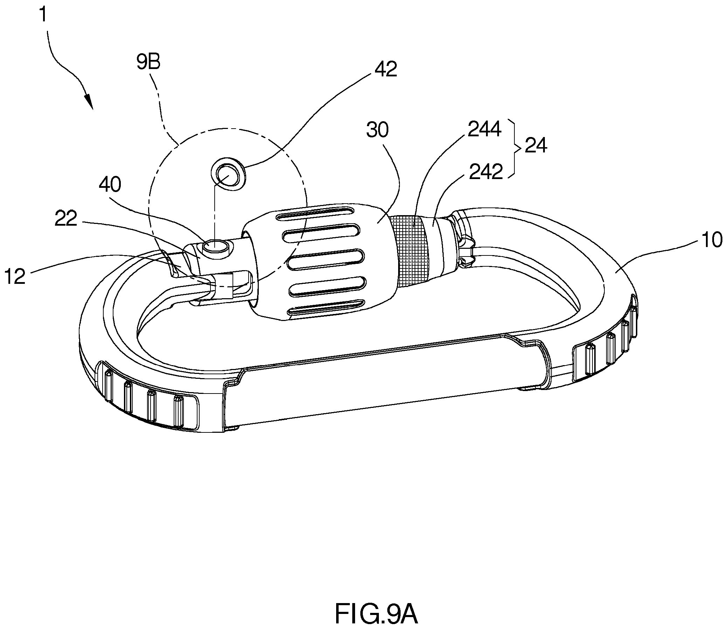

When the free end 24 abuts against the abutting portion 14 of the insulating body 10, and the restricting sleeve 30 completely covers the second insulating section 244 of the insulating gate 24 and covers at least a part of the abutting portion 14 of the insulating body 10, the restricting sleeve 30 is defined as being located in a safe position, as shown in FIG. 1, and could not freely pivot. When the free end 24 abuts against the abutting portion 14 of the insulating body, and at least a part of the second insulating section 244 is not covered by the restricting sleeve 30 to be exposed, the restricting sleeve 244 is defined as being located at a warning position, as shown in FIG. 9A. In the current embodiment, a user could easily identify whether the insulating carabiner hook 1 is locked properly to be in a safe state or not by different colors of the second insulating section 244 and the first insulating section 242 and by an easy security checking process, thereby to provide safety protection for the user. In addition, an entire outer surface of the insulating carabiner hook 1 is coated by an insulating material, thereby to avoid electric shock or electric conduction occurring on the carabiner hook, providing further safety protection for electric maintenance staffs.

In the current embodiment, when the free end 24 of the insulating gate 20 abuts against the abutting portion 14 of the insulating body 10, and the restricting sleeve 30 is located at the warning position, at least a part of the second insulating section 244 of the insulating gate 20 is exposed via the restricting sleeve 30, and the free end 24 of the insulating gate 20 could not firmly abut against the abutting portion 14 of the insulating body 10.

In an embodiment, when the free end 24 of the insulating gate 20 abuts against the abutting portion 14 of the insulating body 10, and the restricting sleeve 30 is located at the warning position , at least a part of the second insulating section 244 of the insulating gate 20 is exposed via the restricting sleeve 30, and the insulating gate 20 could freely pivot relative to the insulating body 10.

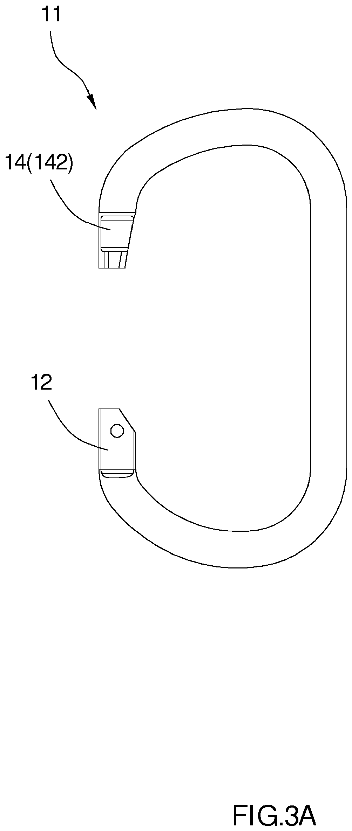

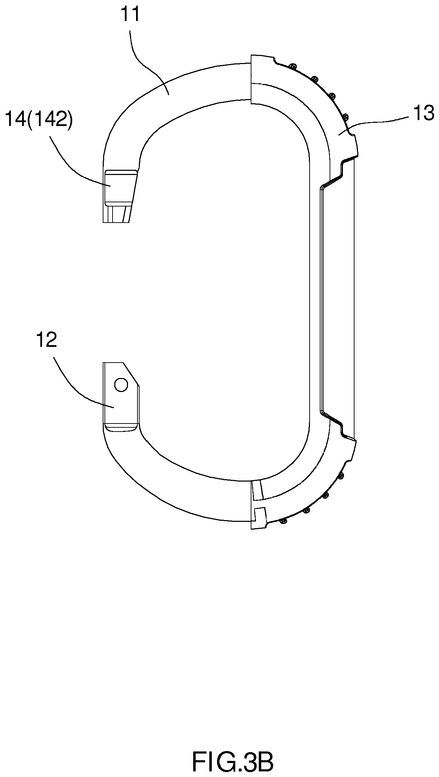

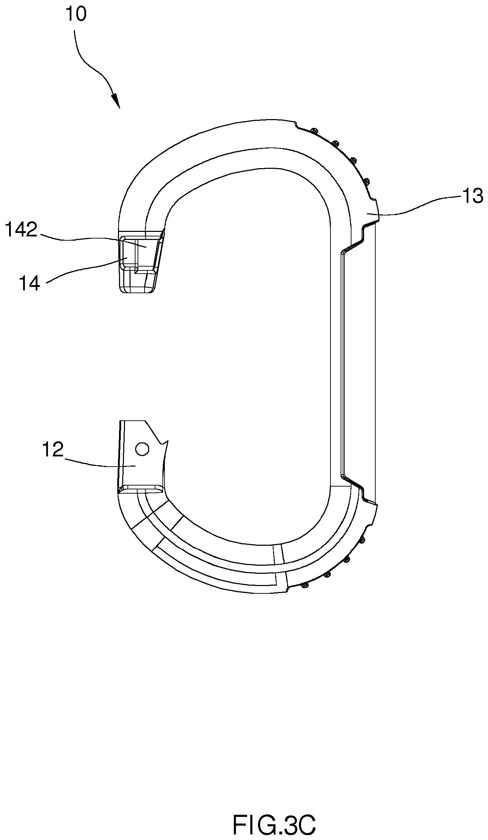

As shown in FIG. 3A to FIG. 3C, the insulating body 10 includes a core material 11 and an insulating layer 13, wherein the core material 11 is coated by the insulating layer 13. A part of the core material 11 of the insulating body 10 located at the abutting portion 14 is not entirely coated by the insulating layer 13, so that a part of the core material 11 located at the abutting portion 14 is exposed out, as shown in FIG. 3C. As shown in FIG. 3A, the core material 11 includes the connecting portion 12 and the abutting portion 14, wherein the abutting portion 14 has an outer surface 142. Reference is next made to FIG. 3B, a left-half portion of the core material 11 is held in a mold (not shown), so that a right-half portion of the core material 11 is suspended in the mold, and the insulating layer 13 is formed on a surface of the right-half portion of the core material 11. Reference is next made to FIG. 3C, the right-half portion of the core material 11 coated with the insulating layer 13 is held in another mold (not shown), so that the left-half portion of the core material 11 is suspended in the another mold, and the insulating layer 13 is formed on a surface of the left-half portion of the core material 11, wherein a part of the outer surface 142 of the abutting portion 14 of the insulating body 10 is not coated by the insulating layer 13 to be exposed out.

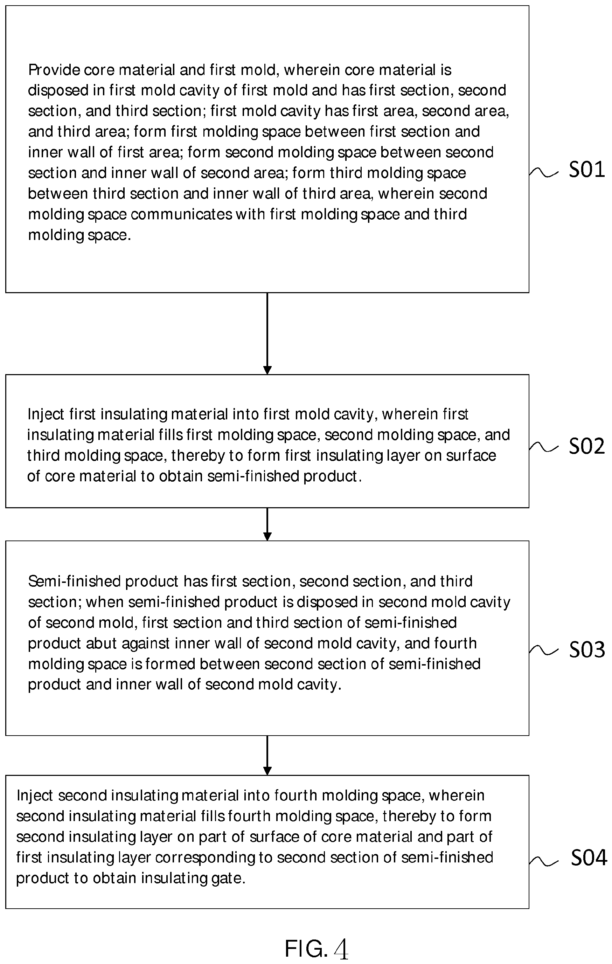

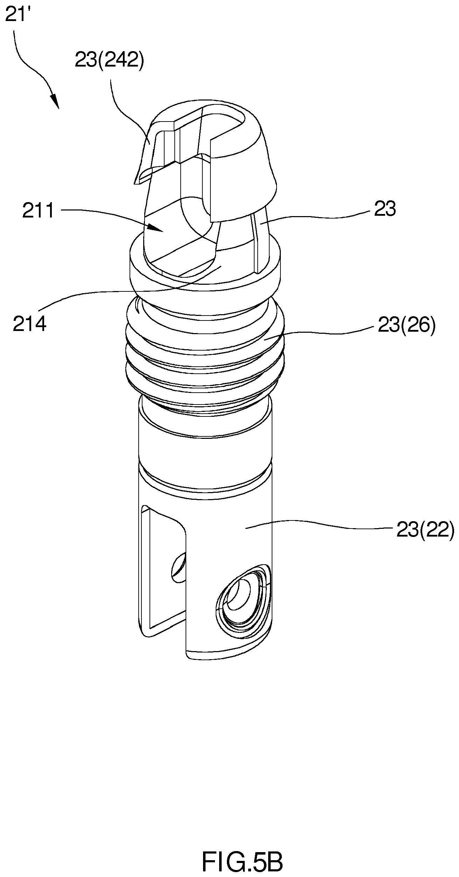

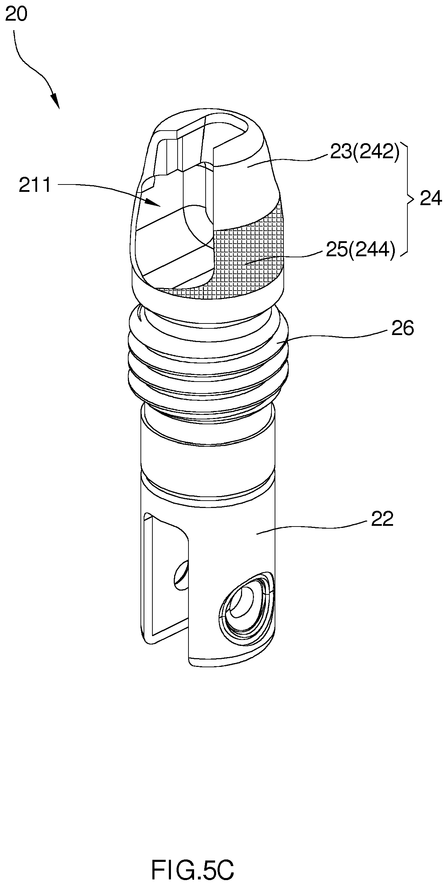

As shown in FIG. 4 to FIG. 7B, FIG. 4 is a flowchart of a manufacturing method of the insulating gate of the carabiner hook according to the embodiment of the present invention which includes the following steps:
Step S01, a core material 21 of the insulating gate 20 and a first mold 50 is provided, wherein the core material 21 is disposed in a first mold cavity 52 of the first mold 50; the core material 21 has a first section 212, a second section 214, and a third section 216, and the first mold cavity 52 has a first area, a second area, and a third area, wherein the first section 212 is disposed within the first area, the second section 214 is disposed within the second area, and the third section 216 is disposed within the third area; a first molding space 522 is formed between the first section 212 and an inner wall of the first area; a second molding space 524 is formed between the second section 214 and an inner wall of the second area; a third molding space 526 is formed between the third section 216 and an inner surface of the third area, wherein the second molding space 524 communicates with the first molding space 522 and the third molding space 526;
Step S02, a first insulating material is injected into the first mold cavity 52, and fills the first molding space 522, the second molding space 524, and the third molding space 526, thereby to form a first insulating layer 23 on a surface of the core material 21 so as to obtain a semi-finished product 21', as shown in FIG. 5B;
Step S03, the semi-finished product 21' has a first section 212', a second section 214', and a third section 216'; when the semi-finished product 21' is disposed in a second mold cavity 62 of a second mold 60, the first section 212' and the third section 216' abut against an inner wall of the second mold cavity 62, while a fourth molding space 622 is formed between the second section 214' and the inner wall of the second mold cavity 62;
Step S04, a second insulating material is injected into the fourth molding space 622, and fills the fourth molding space 622, thereby to form a second insulating layer 25 on the surface of the core material 21 of the insulating gate 20 and the first insulating layer 23 corresponding to the second section 214' of the semi-finished product 21', so as to obtain the insulating gate 20.

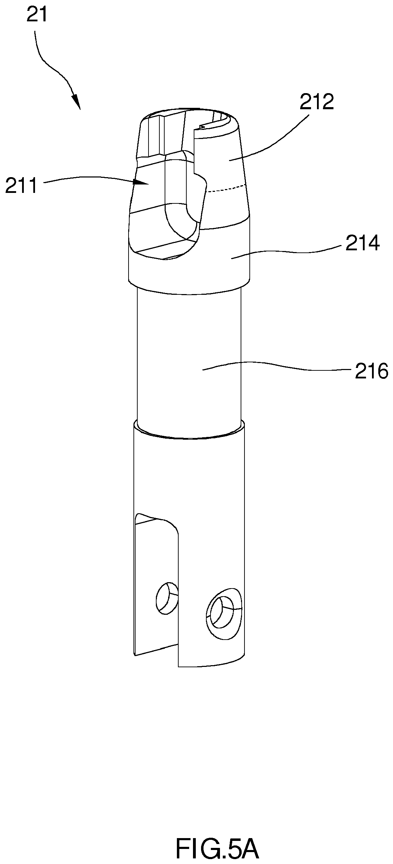

As shown in FIG. 5A, the core material 21 of the insulating gate 20 has the first section 212, the second section 214, and the third section 216, in order from the free end 24 to the connecting end 22, wherein a recess 211 is formed on a combination of the first section 212 and the second section 214 of the core material 21, and has an inner surface.

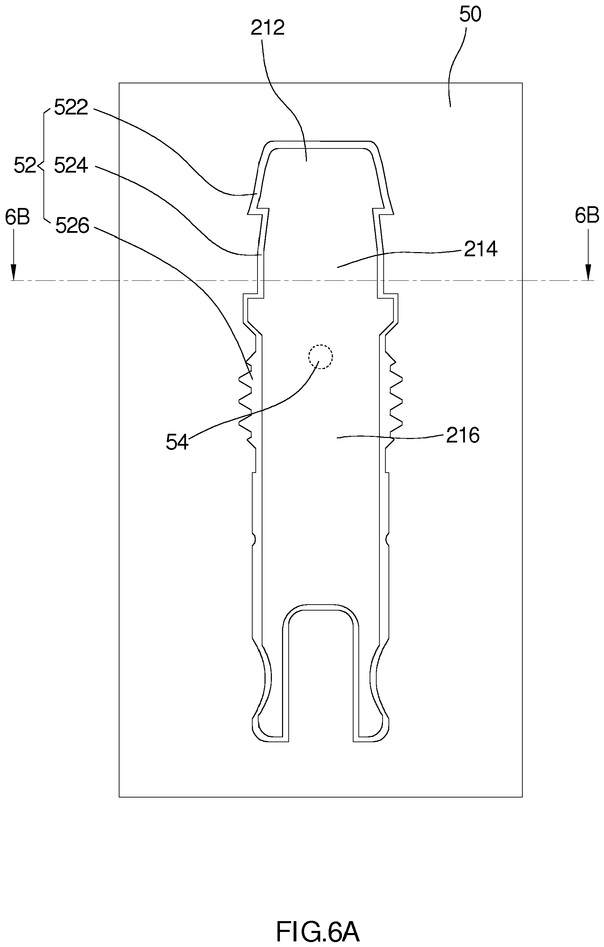

As shown in FIG. 6A, the first molding space 522 is formed between the first section 212 and the inner wall of the first area; the second molding space 524 is formed between the second section 214 and the inner wall of the second area; the third molding space 526 is formed between the third section 216 and the inner surface of the third area, wherein the second molding space 524 communicates with the first molding space 522 and the third molding space 526. In the current embodiment, the first mold 50 has an injecting hole 54 communicating with the third area (i.e. the third molding space 526) of the first mold cavity 52. In the current embodiment, the first insulating material, which is plastic as an example, is injected into the third area of the first mold cavity 52 via the injecting hole 54, and sequentially flows through and fills the third molding space 526, the second molding space 524, and the first molding space 522.

As shown in FIG. 5A, the first section 212 of the core material 21 of the insulating gate 20 has a first outer surface, the second section 214 has a second outer surface, and the third section 216 has a third outer surface. The first outer surface, the third outer surface, and a part of the second outer surface are coated with the first insulating layer 23, wherein the first insulating layer 23 forms the external threaded section 26 on the outer surface of the third section 216 of the core material 21, as shown in FIG. 5B.

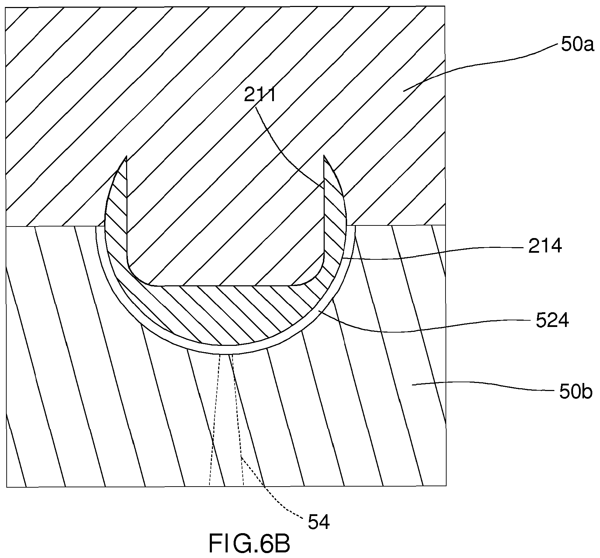

As shown in FIG. 6B, the first mold 50 includes an upper mold 50a and a lower mold 50b which could be engaged with each other to constitute the first mold 50, wherein the upper mold 50a is in contact with the inner surface of the recess 211 of the core material 21 of the insulating gate 20 and a part of an outer surface of the core material 21 of the insulating gate 20, and the second molding space 524 is formed between the lower mold 50b and the second section 214 of the core material 21 of the insulating gate 20. When the first insulating material is injected into the first mold cavity 52 via the injecting hole 54, the first insulating material fills the second molding space 524, thereby to form the first insulating layer 23 on the second outer surface of the second section 214.

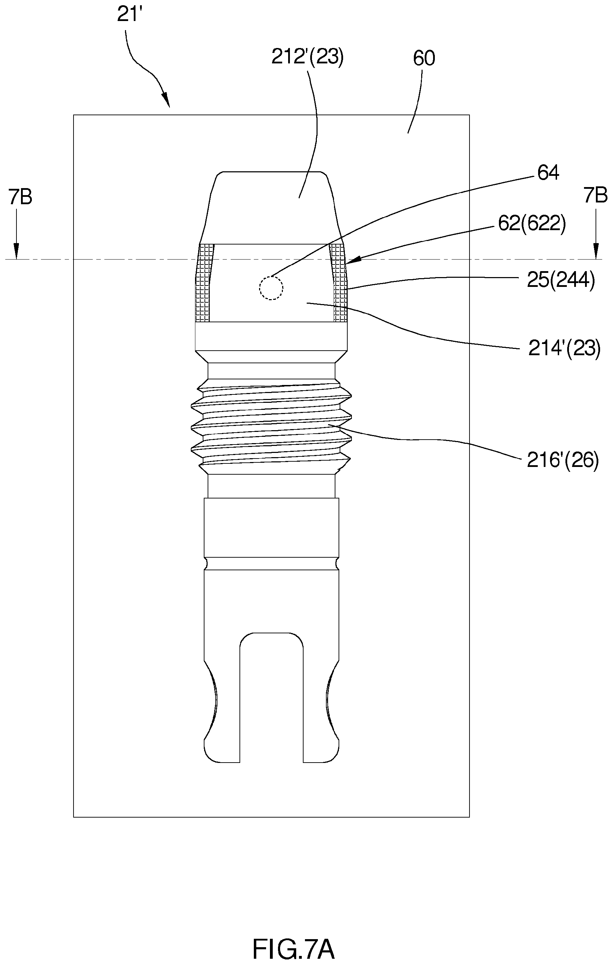

As shown in FIG. 7A, the semi-finished product 21' has the first section 212', the second section 214', and the third section 216', wherein when the semi-finished product 21' is disposed in the second mold cavity 62 of the second mold 60, the first section 212' and the third section 216' abut against the inner wall of the second mold cavity 62, and the fourth molding space 622 is formed between the second section 214' and the inner wall of the second mold cavity 62.

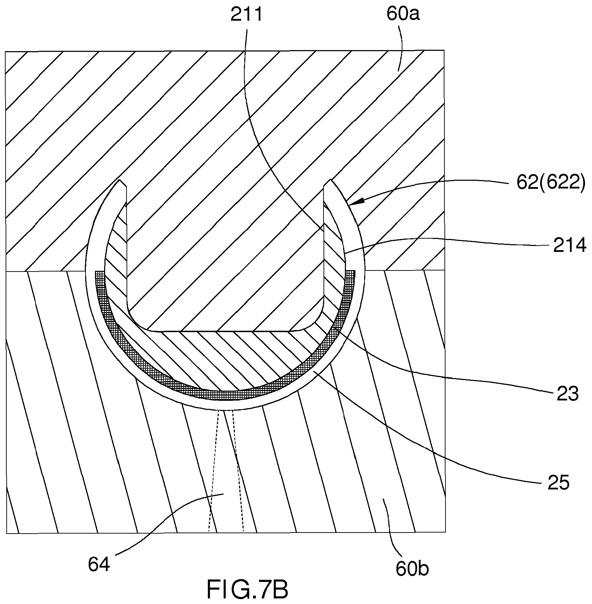

As shown in FIG. 7B, the second mold 60 includes an upper mold 60a and a lower mold 60b which could be engaged with each other to constitute the second mold 60, wherein the upper mold 60a of the second mold 60 is in contact with the inner surface of the recess 211 of the semi-finished product 21', and the fourth molding space 622 is formed between the upper mold 60a and the outer surface of the second section 214' of the semi-finished product 21' and is also formed between the lower mold 60b and the first insulating layer 23 and between the lower mold 60b and second section 214' of the semi-finished product 21'. When the second insulating material, which is plastic as an example, is injected into the second mold cavity 62 via the injecting hole 64, the second insulating material fills the fourth molding space 622, thereby to form the second insulating layer 25 on the first insulating layer 23 and the second outer surface of the second section 214 of the core material 21 of the insulating gate 20 so as to obtain the insulating gate 20. In the current embodiment, the first insulating layer 23 corresponding to the second section 214 of the core material 21 and the entire second outer surface of the second section 214 of the core material 21 of the insulating gate 20.

According to the invention, at least a part of the inner surface of the recess 211 is not coated with the first insulating layer 23, or is not coated with the second insulating layer 25, or is not coated with the first insulating layer 23 and the second insulating layer 25. In the current embodiment, the free end 24 has an outer surface, wherein the entire outer surface of the free end 24 corresponding to the first insulating section 242 is coated with the first insulating layer 23, thereby to form the first insulating section 242. A part of the outer surface of the free end 24 corresponding to the second insulating section 244 is coated with the first insulating layer 23, and a part of the first insulating layer 23 corresponding to the second insulating section 244 and the entire outer surface of the free end 24 corresponding to the second insulating section 244 are coated with the second insulating layer 25, thereby to form the second insulating section 244. In short, the second insulating section 244 includes the first insulating layer 23 and the second insulating layer 25, wherein the core material 21 of the insulating gate 20 corresponding to the second insulating section 244 is partially coated with the first insulating layer 23, and the core material 21 of the insulating gate 20 and the first insulating layer 23 are entirely coated with the second insulating layer 25 . According to the invention, the color of the second insulating section 244 is different from a color of the external threaded section 26. In the current embodiment, the color of the first insulating section 242 is the same as the color of the external threaded section 26 and a color of the connecting end 22. In an embodiment, a material and the color of the first insulating layer 23 are the same as a material and the color of the external threaded section 26.

In conclusion, the insulating gate 20 includes the core material 21, the first insulating layer 23, the second insulating layer 25, the free end 24, and the connecting end 22, wherein the first insulating layer 23 is disposed on the surface of the core material 21 of the insulating gate 20, and forms the external threaded section 26 between the free end 24 and the connecting end 22, and includes the first insulating section 242 and the second insulating section 244 on the free end 24. The second insulating section 244 is located between the first insulating section 242 and the external threaded section 26. The core material 21 of the insulating gate 20 corresponding to the first insulating section 242 and a part of the core material 21 of the insulating gate 20 corresponding to the second insulating section 244 are coated with the first insulating layer 23. The first insulating layer 23 and the core material 21 of the insulating gate 20 corresponding to the second insulating section 244 are coated with the second insulating layer 25. The color of the second insulating section 244 is different from the color of the first insulating section 242.

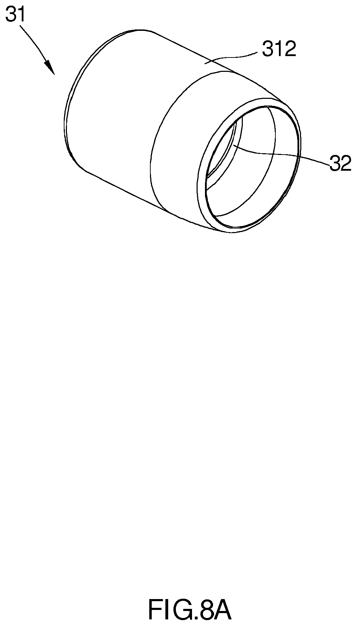

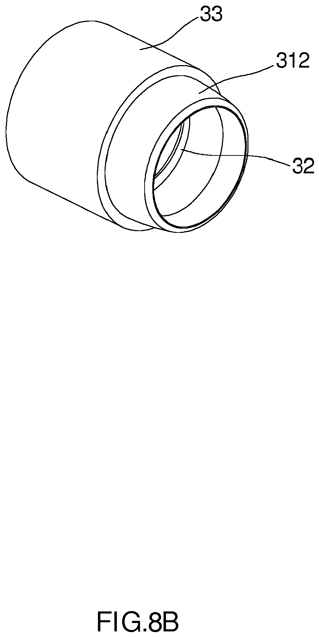

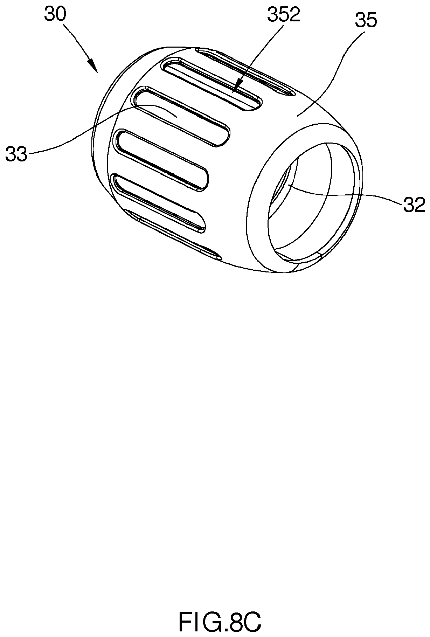

As shown in FIG. 8A to FIG. 8C, the restricting sleeve 30 includes a core material 31, a first insulating layer 33, and a second insulating layer 35, wherein the core material 31 of the restricting sleeve 30 is coated with the first insulating layer 33 and the second insulating layer 35. As shown in FIG. 8A, the core material 31 of the restricting sleeve 30 has an outer surface 312 and an internal threaded section 32. Reference is next made to FIG. 8B, a right-half portion of the core material 31 of the restricting sleeve 30 is held in a mold (not shown), so that a left-half portion of the core material 31 of the restricting sleeve 30 is suspended in the mold, and the first insulating layer 33 of the restricting sleeve 30 is formed on the outer surface 312 of the left-half portion of the core material 31 of the restricting sleeve 30. Reference is next made to FIG. 8C, the core material 31 coated with the first insulating layer 33 of the restricting sleeve 30 is held in another mold (not shown) having a plurality of positioning ribs, so that the core material 31 coated with the first insulating layer 33 of the restricting sleeve 30 is suspended in the another mold, and the second insulating layer 35 of the restricting sleeve 30 is formed on the outer surface 312 of the core material 31 of the restricting sleeve 30 and on the first insulating layer 33 of the restricting sleeve 30. In the current embodiment, a plurality of slots 352 are recessed into a surface of the second insulating layer 35 of the restricting sleeve 30 and are arranged at intervals in an annular direction surrounding the core material 31 of the restricting sleeve 30. In the current embodiment, a part of the first insulating layer 33 of the restricting sleeve 30 is exposed via the slots 352 of the second insulating layer 35 of the restricting sleeve 30. In the current embodiment, a color of the first insulating layer 33 of the restricting sleeve 30 is different from a color of the second insulating layer 35 of the restricting sleeve 30, and therefore the color of the first insulating layer 33 of the restricting sleeve 30 could be exposed via the slots 352 of the second insulating layer 35 of the restricting sleeve 30.

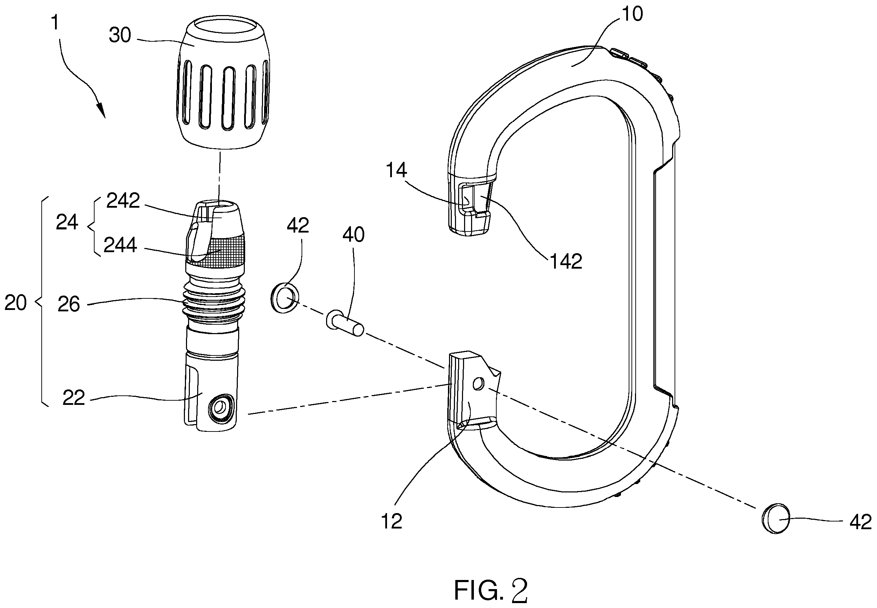

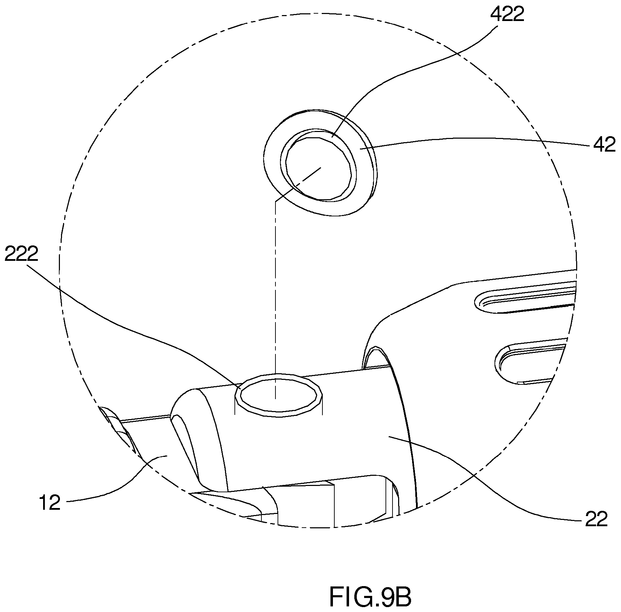

Reference is next made to FIG. 2 and FIG. 9A, the connecting end 22 of the insulating gate 20 is pivotally connected to the connecting portion 12 of the insulating body 10 via the pivot 40, wherein two insulating covers 42 respectively cover two ends of the pivot 40. In the current embodiment, the pivot 40 is, but not limited to, a rivet. As shown in FIG. 9B, each of the insulating covers 42 includes an annular groove 422, and each of two opposite sides of the connecting end 22 of the insulating gate 20 includes a projecting ring 222, wherein the annular groove 422 of each of the insulating covers 42 corresponds to one of the projecting rings 222. The insulating covers 42 are respectively fixed on the projecting rings 222 of the connecting end 22 via the annular grooves 422 by an ultrasonic welding process.

With the aforementioned design, the user could easily identify whether the insulating carabiner hook is properly locked to be the safety state or not through the different colors between the first insulating section and the second insulating section and with the easy security checking process, thereby to protect the safety of the user and enhance the convenience of use. In addition, the entire outer surface of the insulating carabiner hook is coated with the insulating material, thereby to avoid electric shock or electric conduction occurring on the carabiner hook, providing further safety protection for electric maintenance staffs.

## Claims

1. An insulating gate (20) for a carabiner hook, comprising a core material (21), a first insulating layer (23), and a second insulating layer (25), wherein the core material (21) comprises a free end (24) and a connecting end (22); the first insulating layer (23) is provided on a surface of the core material (21), and forms an external threaded section (26) between the free end (24) and the connecting end (22);
the first insulating layer (23) comprises a first insulating section (242) and a second insulating section (244) on the free end (24); the second insulating section (244) is located between the first insulating section (242) and the external threaded section (26); a color of the second insulating section (244) is different from a color of the first insulating section (242);
a part of the core material (21) corresponding to the first insulating section (242) is coated with the first insulating layer (23), and a part of the core material (21) corresponding to the second insulating section (244) is partially coated with the first insulating layer (23); a part of the first insulating layer (23) corresponding to the second insulating section (244) is coated with the second insulating layer (25), and a part of the core material (21) corresponding to the second insulating section (244) is coated with the second insulating layer (25); the color of the second insulating section (244) is different from a color of the external threaded section (26); the free end (24) has a recess (211) having an inner surface; at least a part of the inner surface of the recess (211) is not coated with at least one of the first insulating layer (23) and the second insulating layer (25).

2. The insulating gate (20) of claim 1, wherein the free end (24) has an outer surface; a part of the outer surface of the free end (24) corresponding to the first insulating section (242) is entirely coated with the first insulating layer (23), and a part of the outer surface of the free end (24) corresponding to the second insulating section (244) is partially coated with the first insulating layer (23); a part of the first insulating layer (23) corresponding to the second insulating section (244) is coated with the second insulating layer (25), and a part of the outer surface of the free end (24) corresponding to the second insulating section (244) is entirely coated with the second insulating layer (25).

3. The insulating gate (20) of claim 1, wherein the color of the first insulating section (242) is the same as a color of the external threaded section (26).

4. An insulating carabiner hook (1), **characterized in that**:
an insulating body (10) having a connecting portion (12) and an abutting portion (14) respectively located on two opposite ends of the insulating body (10);
the insulating gate (20) as claimed in claim 1 having the connecting end (22), the free end (24), and the external threaded section (26), wherein the external threaded section (26) is located between the connecting end (22) and the free end (24); the insulating gate (20) is pivotally connected to the connecting portion (12) of the insulating body (10) via the connecting end (22), thereby the insulating gate (20) is pivotable to be pivot relative to the insulating body (10); the free end (24) is operable to be abutted against or away from the abutting portion (14) of the insulating body (10), and comprises the first insulating section (242) and the second insulating section (244); the second insulating section (244) is located between the first insulating section (242) and the external threaded section (26); the color of the second insulating section (244) is different from the color of the first insulating section (242); and
a restricting sleeve (30) having an internal threaded section (32) and fitting around the insulating gate (20), wherein the internal threaded section (32) is screwed with the external threaded section (26) of the insulating gate (20); the restricting sleeve (30) is operable to rotate, thereby the restricting sleeve (30) is movable to be moved in an axial direction (AX) of the insulating gate (20);
wherein when the free end (24) abuts against the abutting portion (14) of the insulating body (10), and the restricting sleeve (30) completely covers the second insulating section (244) and covers at least a part of the abutting portion (14) of the insulating body (10), the restricting sleeve (30) is defined as being located in a safe position, and at this time, the insulating gate (20) cannot freely pivot; when the free end (24) abuts against the abutting portion (14) of the insulating body (10), and at least a part of the second insulating section (244) of the insulating gate (20) is exposed via the restricting sleeve (30), the restricting sleeve (30) is defined as being located at a warning position.

5. The insulating carabiner hook (1) of claim 4, wherein when the free end (24) abuts against the abutting portion (14) of the insulating body (10), and the restricting sleeve (30) is located at the warning position, at least a part of the second insulating section (244) of the insulating gate (20) is exposed via the restricting sleeve (30), and the free end (24) cannot firmly abut against the abutting portion (14).

6. The insulating carabiner hook (1) of claim 4, wherein when the free end (24) abuts against the abutting portion (14) of the insulating body (10), and the restricting sleeve (30) is located at the warning position, at least a part of the second insulating section (244) of the insulating gate (20) is exposed via the restricting sleeve (30), and the insulating gate (20) is pivotable to pivot relative to the insulating body (10).

7. The insulating carabiner hook (1) of claim 4, wherein the insulating body (10) comprises a core material (11) and an insulating layer (13); the core material (11) is coated with the insulating layer (13); a part of the core material (11) located at the abutting portion (14) is not entirely coated by the insulating layer (13), thereby a part of the core material (11) located at the abutting portion (14) is exposed out.

8. The insulating carabiner hook (1) of claim 4, wherein the restricting sleeve (30) comprises a core material (31) and an insulating layer (35); the core material (31) is coated with the insulating layer (35); the insulating layer (35) has a plurality of slots which are recessed into a surface of the insulating layer (35) and are arranged at intervals in an annular direction surrounding the core material (31).

9. The insulating carabiner hook (1) of claim 4, wherein the insulating gate (20) comprises a core material (21) and an insulating layer (23, 26, 22); the core material (21) is coated with the insulating layer (23, 26, 22); the insulating layer (23, 26, 22) comprises the first insulating section (242), the second insulating section (244), the external threaded section (26), and the connecting end (22) in order from the free end (24) to the connecting end (22); a part of the core material (21) corresponding to the connecting portion (12) of the insulating body (10) is coated with the connecting end (22) of the insulating layer (23, 26, 22); a color of the external threaded section (26) and a color of the connecting end (22) are different from the color of the second insulating section (244).

10. The insulating carabiner hook (1) of claim 9, wherein the color of the first insulating section (242) is the same as the color of the external threaded section (26) and the color of the connecting end (22).

11. The insulating carabiner hook (1) of claim 9, wherein the first insulating layer (23) and a part of the core material (21) corresponding to the second insulating section (244) are entirely coated with the second insulating layer (25).

12. The insulating carabiner hook (1) of claim 10, wherein a material of the first insulating layer (23) and the color of the first insulating layer (23) are the same as a material of the external threaded section (26) and the color of the external threaded section (26).

13. The insulating carabiner hook (1) of claim 4, wherein the connecting end (22) of the insulating gate (20) is pivotally connected to the connecting portion (12) of the insulating body (10) via a pivot (40), two insulating covers (42) respectively cover two ends of the pivot (40).

14. The insulating carabiner hook (1) of claim 13, wherein each of the insulating covers (42) comprises an annular groove (422); each of two opposite sides of the connecting end (22) of the insulating gate (20) comprises a projecting ring (222); the annular groove (422) of each of the insulating covers (42) corresponds to one of the projecting rings (222); the insulating covers (42) are respectively fixed on the projecting rings (222) of the connecting end (22) via the annular grooves (422) by an ultrasonic welding process.

15. A manufacturing method of the insulating gate (20) as claimed in claim 1, comprising steps of:
providing the core material (21) and a first mold (50), wherein the core material (21) is disposed in a first mold cavity (52) of the first mold (50), and has a first section (212), a second section (214), and a third section (216); the first mold cavity (52) has a first area, a second area, and a third area; the first section (212) is disposed within the first area; the second section (214) is disposed within the second area; the third section (216) is disposed within the third area; forming a first molding space (522) between the first section (212) and an inner wall of the first area; forming a second molding space (524) between the second section (214) and an inner wall of the second area; forming a third molding space (526) between the third section (216) and an inner wall of the third area, wherein the second molding space (524) communicates with the first molding space (522) and the third molding space (526);
injecting a first insulating material into the first mold cavity (52), wherein the first insulating material fills the first molding space (522), the second molding space (524), and the third molding space (526), thereby to form the first insulating layer (23) on a surface of the core material (21) so as to obtain a semi-finished product (21'); the semi-finished product (21') has a first section (212'), a second section (214'), and a third section (216'); when the semi-finished product (21') is disposed in a second mold cavity (62) of a second mold (60), the first section (212') and the third section (216') of the semi-finished product (21') abut against an inner wall of the second mold cavity (62), and a fourth molding space (622) is formed between the second section (214') of the semi-finished product (21') and the inner wall of the second mold cavity (62); and
injecting a second insulating material into the fourth molding space (622), wherein the second insulating material fills the fourth molding space (622), thereby to form a second insulating layer (25) on a part of a surface of the core material (21) and a part of the first insulating layer (23) corresponding to the second section (214') of the semi-finished product (21') so as to obtain the insulating gate (20).

16. The method of claim 15, wherein the first mold (50) has an injecting hole (54) communicating with the third area of the first mold cavity (52).

17. The method of claim 16, wherein the first insulating material is injected into the third area of the first mold cavity (52) via the injecting hole (54), and sequentially fills the third molding space (526), the second molding space (524), and the first molding space (522).

18. The method of claim 15, wherein the first section (212) of the core material (21) has a first outer surface; the second section (214) of the core material (21) has a second outer surface; the third section (216) of the core material (21) has a third outer surface; the first outer surface, the third outer surface, and a part of the second outer surface are coated with the first insulating layer (23); a part of the first insulating layer (23) corresponding to the second section (214) of the core material (21) and the entire second outer surface of the second section (214) of the core material (21) are coated with the second insulating layer (25).

19. The method of claim 18, wherein the first insulating layer (23) forms an external threaded section (26) on the third outer surface of the third section (216) of the core material (21).

20. The method of claim 18, wherein a recess (211) is formed on a combination of the first section (212) and the second section (214) of the core material (21), and has an inner surface; at least a part of the inner surface of the recess (211) is not coated by at least one of the first insulating layer (23) and the second insulating layer (25).

## Patentansprüche

1. Isolierender Verschluss (20) für einen Karabinerhaken, welcher ein Kernmaterial (21), eine erste Isolierschicht (23) und eine zweite Isolierschicht (25) aufweist, wobei das Kernmaterial (21) ein freies Ende (24) und ein Verbindungsende (22) aufweist, wobei die erste Isolierschicht (23) an einer Fläche des Kernmaterials (21) bereitgestellt ist und einen Außengewindeabschnitt (26) zwischen dem freien Ende (24) und dem Verbindungsende (22) bildet,
wobei die erste Isolierschicht (23) einen ersten Isolierabschnitt (242) und einen zweiten Isolierabschnitt (244) an dem freien Ende (24) aufweist, wobei der zweite Isolierabschnitt (244) zwischen dem ersten Isolierabschnitt (242) und dem Außengewindeabschnitt (26) angeordnet ist, wobei sich eine Farbe des zweiten Isolierabschnitts (244) von einer Farbe des ersten Isolierabschnitts (242) unterscheidet,
wobei ein Teil des Kernmaterials (21), welcher mit dem ersten Isolierabschnitt (242) korrespondiert, mit der ersten Isolierschicht (23) beschichtet ist, und ein Teil des Kernmaterials (21), welcher mit dem zweiten Isolierabschnitt (244) korrespondiert, teilweise mit der ersten Isolierschicht (23) beschichtet ist, wobei ein Teil der ersten Isolierschicht (23), welcher mit dem zweiten Isolierabschnitt (244) korrespondiert, mit der zweiten Isolierschicht (25) beschichtet ist, und ein Teil des Kernmaterials (21), welcher mit dem zweiten Isolierabschnitt (244) korrespondiert, mit der zweiten Isolierschicht (25) beschichtet ist, wobei sich die Farbe des zweiten Isolierabschnitts (244) von einer Farbe des Außengewindeabschnitts (26) unterscheidet, wobei das freie Ende (24) eine Aussparung (211) hat, welche eine Innenfläche hat, wobei zumindest ein Teil der Innenfläche der Aussparung (211) nicht mit zumindest einer von der ersten Isolierschicht (23) und der zweiten Isolierschicht (25) beschichtet ist.

2. Isolierender Verschluss (20) gemäß Anspruch 1, wobei das freie Ende (24) eine Außenfläche hat, ein Teil der Außenfläche des freien Endes (24), welcher mit dem ersten Isolierabschnitt (242) korrespondiert, vollständig mit der ersten Isolierschicht (23) beschichtet ist, und ein Teil der Außenfläche des freien Endes (24), welcher mit dem zweiten Isolierabschnitt (244) korrespondiert, teilweise mit der ersten Isolierschicht (23) beschichtet ist, wobei ein Teil der ersten Isolierschicht (23), welcher mit dem zweiten Isolierabschnitt (244) korrespondiert, mit der zweiten Isolierschicht (25) beschichtet ist, und ein Teil der Außenfläche des freien Endes (24), welcher mit dem zweiten Isolierabschnitt (244) korrespondiert, vollständig mit der zweiten Isolierschicht (25) beschichtet ist.

3. Isolierender Verschluss (20) gemäß Anspruch 1, wobei die Farbe des ersten Isolierabschnitts (242) die gleiche ist wie die Farbe des Außengewindeabschnitts (26).

4. Isolierender Karabinerhaken (1), **dadurch gekennzeichnet, dass**:
ein Isolierkörper (10) einen Verbindungsabschnitt (12) und einen Anliegabschnitt (14) hat, welche in jeweils zugeordneter Weise an zwei gegenüberliegenden Enden des Isolierkörpers (10) angeordnet sind,
der isolierende Verschluss (20) gemäß Anspruch 1 das Verbindungsende (22), das freie Ende (24) und den Außengewindeabschnitt (26) hat, wobei sich der Außengewindeabschnitt (26) zwischen dem Verbindungsende (22) und dem freien Ende (24) befindet, wobei der isolierende Verschluss (20) schwenkbar mit dem Verbindungsabschnitt (12) des Isolierkörpers (10) über das Verbindungsende (22) verbunden ist, wodurch der Isolierende Verschluss (20) schwenkbar ist, um relativ zu dem Isolierkörper (10) geschwenkt zu werden, wobei das freie Ende (24) betätigbar ist, um an dem Anliegabschnitt (14) des Isolierkörpers (10) anzuliegen oder von jenem entfernt zu sein, und den ersten Isolierabschnitt (242) und den zweiten Isolierabschnitt (244) aufweist, wobei sich der zweite Isolierabschnitt (244) zwischen dem ersten Isolierabschnitt (242) und dem Außengewindeabschnitt (26) befindet, wobei sich die Farbe des zweiten Isolierabschnitts (244) von der Farbe des ersten Isolierabschnitts (242) unterscheidet, und
eine Begrenzungshülse (30) einen Innengewindeabschnitt (32) hat und um den isolierenden Verschluss (20) herumpasst, wobei der Innengewindeabschnitt (32) mit dem Außengewindeabschnitt (26) des isolierenden Verschlusses (20) verschraubt ist, wobei die Begrenzungshülse (30) betätigbar ist, um sich zu drehen, wodurch die Begrenzungshülse (30) bewegbar ist, um in einer Axialrichtung (AX) des isolierenden Verschlusses (20) bewegt zu werden,
wobei, wenn das freie Ende (24) an dem Anliegabschnitt (14) des Isolierkörpers (10) anliegt und die Begrenzungshülse (30) den zweiten Isolierabschnitt (244) vollständig bedeckt und zumindest einen Teil des Anliegabschnitts (14) des Isolierkörpers (10) bedeckt, die Begrenzungshülse (30) definiert ist, als dass sie sich in einer sicheren Position befindet, und wobei zu diesem Zeitpunkt der isolierende Verschluss (20) nicht frei schwenken kann, wobei, wenn das freie Ende (24) an dem Anliegabschnitt (14) des Isolierkörpers (10) anliegt und mindestens ein Teil des zweiten Isolierabschnitts (244) des isolierenden Verschlusses (20) über die Begrenzungshülse (30) exponiert ist, die Begrenzungshülse (30) definiert ist, als dass sie sich an einer Warnposition befindet.

5. Isolierender Karabinerhaken (1) gemäß Anspruch 4, wobei, wenn das freie Ende (24) an dem Anliegabschnitt (14) des Isolierkörpers (10) anliegt und sich die Begrenzungshülse (30) an der Warnposition befindet, zumindest ein Teil des zweiten Isolierabschnitts (244) des isolierenden Verschlusses (20) über die Begrenzungshülse (30) exponiert ist und das freie Ende (24) nicht fest an dem Anliegabschnitt (14) anliegen kann.

6. Isolierender Karabinerhaken (1) gemäß Anspruch 4, wobei, wenn das freie Ende (24) an dem Anliegabschnitt (14) des Isolierkörpers (10) anliegt und sich die Begrenzungshülse (30) an der Warnposition befindet, zumindest ein Teil des zweiten Isolierabschnitts (244) des isolierenden Verschlusses (20) über die Begrenzungshülse (30) exponiert ist und der isolierende Verschluss (20) schwenkbar ist, um relativ zu dem Isolierkörper (10) zu schwenken.

7. Isolierender Karabinerhaken (1) gemäß Anspruch 4, wobei der isolierende Körper (10) ein Kernmaterial (11) und eine Isolierschicht (13) aufweist, wobei das Kernmaterial (11) mit der Isolierschicht (13) beschichtet ist, wobei ein Teil des Kernmaterials (11), welcher sich an dem Anliegabschnitt (14) befindet, nicht vollständig mittels der Isolierschicht (13) beschichtet ist, wodurch ein Teil des Kernmaterials (11), welcher sich an dem Anliegabschnitt (14) befindet, nach außen hin exponiert ist.

8. Isolierender Karabinerhaken (1) gemäß Anspruch 4, wobei die Begrenzungshülse (30) ein Kernmaterial (31) und eine Isolierschicht (35) aufweist, wobei das Kernmaterial (31) mit der Isolierschicht (35) beschichtet ist, wobei die Isolierschicht (35) eine Vielzahl von Schlitzen hat, welche in eine Fläche der Isolierschicht (35) hinein eingelassen sind und in Abständen in einer ringförmigen Richtung, welche das Kernmaterial (31) umschließt, angeordnet sind.

9. Isolierender Karabinerhaken (1) gemäß Anspruch 4, wobei der isolierende Verschluss (20) ein Kernmaterial (21) und eine Isolierschicht (23, 26, 22) aufweist, wobei das Kernmaterial (21) mit der Isolierschicht (23, 26, 22) beschichtet ist, wobei die Isolierschicht (23, 26, 22) der Reihe nach den ersten Isolierabschnitt (242), den zweiten Isolierabschnitt (244), den Außengewindeabschnitt (26) und das Verbindungsende (22) von dem freien Ende (24) aus hin zu dem Verbindungsende (22) aufweist, wobei ein Teil des Kernmaterials (21), welcher mit dem Verbindungsabschnitt (12) des isolierenden Körpers (10) korrespondiert, mit dem Verbindungsende (22) der Isolierschicht (23, 26, 22) beschichtet ist, wobei sich eine Farbe des Außengewindeabschnitts (26) und eine Farbe des Verbindungsendes (22) von der Farbe des zweiten Isolierabschnitts (244) unterscheiden.

10. Isolierender Karabinerhaken (1) gemäß Anspruch 9, wobei die Farbe des ersten Isolierabschnitts (242) die gleiche ist wie die Farbe des Außengewindeabschnitts (26) und die Farbe des Verbindungsendes (22).

11. Isolierender Karabinerhaken (1) gemäß Anspruch 9, wobei die erste Isolierschicht (23) und ein Teil des Kernmaterials (21), welcher mit dem zweiten Isolierabschnitt (244) korrespondiert, vollständig mit der zweiten Isolierschicht (25) beschichtet sind.

12. Isolierender Karabinerhaken (1) gemäß Anspruch 10, wobei ein Material der ersten Isolierschicht (23) und die Farbe der ersten Isolierschicht (23) das gleiche sind wie ein Material des Außengewindeabschnitts (26) und die Farbe des Außengewindeabschnitts (26).

13. Isolierender Karabinerhaken (1) gemäß Anspruch 4, wobei das Verbindungsende (22) des isolierenden Verschlusses (20) über einen Drehpunkt (40) schwenkbar mit dem Verbindungsabschnitt (12) des isolierenden Körpers (10) verbunden ist, wobei zwei isolierende Abdeckungen (42) in jeweils zugeordneter Weise zwei Enden des Drehpunkts (40) bedecken.

14. Isolierender Karabinerhaken (1) gemäß Anspruch 13, wobei jede von den isolierenden Abdeckungen (42) eine Ringnut (422) aufweist, wobei jede von zwei entgegengesetzten Seiten des Verbindungsendes (22) des isolierenden Verschlusses (20) einen hervorstehenden Ring (222) aufweist, wobei die Ringnut (422) von jeder von den isolierenden Abdeckungen (42) mit einem von den hervorstehenden Ringen (222) korrespondiert, wobei die isolierenden Abdeckungen (42) in jeweils zugeordneter Weise an den hervorstehenden Ringen (222) des Verbindungsendes (22) über die Ringnuten (422) mittels eines Ultraschall-Schweißen-Verfahrens fixiert sind.

15. Herstellungsverfahren des isolierenden Verschlusses (20) gemäß Anspruch 1, welches die folgenden Schritte aufweist:
Bereitstellen des Kernmaterials (21) und einer ersten Form (50), wobei das Kernmaterial (21) in einer ersten Formkavität (52) der ersten Form (50) angeordnet wird und einen ersten Abschnitt (212), einen zweiten Abschnitt (214) sowie einen dritten Abschnitt (216) hat, wobei die erste Formkavität (52) einen ersten Bereich, einen zweiten Bereich sowie einen dritten Bereich hat, wobei der erste Abschnitt (212) innerhalb von dem ersten Bereich angeordnet ist, wobei der zweite Abschnitt (214) innerhalb von dem zweiten Bereich angeordnet ist, wobei der dritte Abschnitt (216) innerhalb von dem dritten Bereich angeordnet ist, Bilden eines ersten Formraums (522) zwischen dem ersten Abschnitt (212) und einer Innenwand des ersten Bereichs, Bilden eines zweiten Formraums (524) zwischen dem zweiten Abschnitt (214) und einer Innenwand des zweiten Bereichs, Bilden eines dritten Formraums (526) zwischen dem dritten Abschnitt (216) und einer Innenwand des dritten Bereichs, wobei der zweite Formraum (524) mit dem ersten Formraum (522) und dem dritten Formraum (526) in Verbindung steht,
Einspritzen eines ersten Isoliermaterials in die erste Formkavität (52) hinein, wobei das erste Isoliermaterial den ersten Formraum (522), den zweiten Formraum (524) und den dritten Formraum (526) füllt, um dadurch die erste Isolierschicht (23) an einer Fläche des Kernmaterials (21) zu bilden, um ein Halbzeug (21') zu erlangen, wobei das Halbzeug (21') einen ersten Abschnitt (212'), einen zweiten Abschnitt (214') sowie einen dritten Abschnitt (216') hat, wobei, wenn das Halbzeug (21') in einer zweiten Formkavität (62) einer zweiten Form (60) angeordnet ist, der erste Abschnitt (212') und der dritte Abschnitt (216') des Halbzeugs (21') an einer Innenwand der zweiten Formkavität (62) anliegen, und ein vierter Formraum (622) zwischen dem zweiten Abschnitt (214') des Halbzeugs (21') und der Innenwand der zweiten Formkavität (62) gebildet wird, und
Einspritzen eines zweiten Isoliermaterials in den vierten Formraum (622) hinein, wobei das zweite Isoliermaterial den vierten Formraum (622) füllt, um dadurch eine zweite Isolierschicht (25) an einem Teil einer Fläche des Kernmaterials (21) und einem Teil der ersten Isolierschicht (23), welcher mit dem zweiten Abschnitt (214') des Halbzeugs (21') korrespondiert, zu bilden, um den isolierenden Verschluss (20) zu erlangen.

16. Verfahren gemäß Anspruch 15, wobei die erste Form (50) ein Einspritzloch (54) hat, welches mit dem dritten Bereich der ersten Formkavität (52) in Verbindung steht.

17. Verfahren gemäß Anspruch 16, wobei das erste Isoliermaterial über die Einspritzöffnung (54) in den dritten Bereich der ersten Formkavität (52) hinein eingespritzt wird, und nacheinander den dritten Formraum (526), den zweiten Formraum (524) und den ersten Formraum (522) füllt.

18. Verfahren gemäß Anspruch 15, wobei der erste Abschnitt (212) des Kernmaterials (21) eine erste Außenfläche hat, wobei der zweite Abschnitt (214) des Kernmaterials (21) eine zweite Außenfläche hat, wobei der dritte Abschnitt (216) des Kernmaterials (21) eine dritte Außenfläche hat, wobei die erste Außenfläche, die dritte Außenfläche und ein Teil der zweiten Außenfläche mit der ersten Isolierschicht (23) beschichtet sind, wobei ein Teil der ersten Isolierschicht (23), welcher mit dem zweiten Abschnitt (214) des Kernmaterials (21) korrespondiert, und die gesamte zweite Außenfläche des zweiten Abschnitts (214) des Kernmaterials (21) mit der zweiten Isolierschicht (25) beschichtet sind.

19. Verfahren gemäß Anspruch 18, wobei die erste Isolierschicht (23) einen Außengewindeabschnitt (26) an der dritten Außenfläche des dritten Abschnitts (216) des Kernmaterials (21) bildet.

20. Verfahren gemäß Anspruch 18, wobei eine Aussparung (211) an einer Kombination von dem ersten Abschnitt (212) und dem zweiten Abschnitt (214) des Kernmaterials (21) gebildet wird und eine Innenfläche aufweist, wobei mindestens ein Teil der Innenfläche der Aussparung (211) nicht mit zumindest einer von der ersten Isolierschicht (23) und der zweiten Isolierschicht (25) beschichtet wird.

## Revendications

1. Fermoir isolant (20) pour un mousqueton, comprenant un matériau noyau (21), une première couche isolante (23), et une deuxième couche isolante (25), dans lequel le matériau noyau (21) comprend une extrémité libre (24) et une extrémité de connexion (22) ; la première couche isolante (23) est prévue sur une surface du matériau noyau (21), et forme une section filetée externe (26) entre l'extrémité libre (24) et l'extrémité de connexion (22) ;
la première couche isolante (23) comprend une première section isolante (242) et une deuxième section isolante (244) sur l'extrémité libre (24) ; la deuxième section isolante (244) est située entre la première section isolante (242) et la section filetée externe (26) ; une couleur de la deuxième section isolante (244) est différente d'une couleur de la première section isolante (242) ;
une partie du matériau noyau (21) correspondant à la première section isolante (242) est revêtue de la première couche isolante (23), et une partie du matériau noyau (21) correspondant à la deuxième section isolante (244) est partiellement revêtue de la première couche isolante (23) ; une partie de la première couche isolante (23) correspondant à la deuxième section isolante (244) est revêtue de la deuxième couche isolante (25), et une partie du matériau noyau (21) correspondant à la deuxième section isolante (244) est revêtue de la deuxième couche isolante (25) ; la couleur de la deuxième section isolante (244) est différente d'une couleur de la section filetée externe (26) ; l'extrémité libre (24) a un évidement (211) ayant une surface interne ; au moins une partie de la surface interne de l'évidement (211) n'est pas revêtue d'au moins une de la première couche isolante (23) et de la deuxième couche isolante (25).

2. Fermoir isolant (20) selon la revendication 1, dans lequel l'extrémité libre (24) a une surface extérieure ;
une partie de la surface extérieure de l'extrémité libre (24) correspondant à la première section isolante (242) est entièrement revêtue de la première couche isolante (23), et une partie de la surface extérieure de l'extrémité libre (24) correspondant à la deuxième section isolante (244) est partiellement revêtue de la première couche isolante (23) ; une partie de la première couche isolante (23) correspondant à la deuxième section isolante (244) est revêtue de la deuxième couche isolante (25), et une partie de la surface extérieure de l'extrémité libre (24) correspondant à la deuxième section isolante (244) est entièrement revêtue de la deuxième couche isolante (25).

3. Fermoir isolant (20) selon la revendication 1, dans lequel la couleur de la première section isolante (242) est la même qu'une couleur de la section filetée externe (26).

4. Mousqueton isolant (1), **caractérisé en ce que** :
un corps isolant (10) ayant une partie de connexion (12) et une partie de butée (14) situées respectivement sur deux extrémités opposées du corps isolant (10) ;
le fermoir isolant (20) selon la revendication 1 ayant l'extrémité de connexion (22), l'extrémité libre (24), et la section filetée externe (26), dans lequel la section filetée externe (26) est située entre l'extrémité de connexion (22) et l'extrémité libre (24) ; le fermoir isolant (20) est connecté de manière pivotante à la partie de connexion (12) du corps isolant (10) via l'extrémité de connexion (22), de sorte que le fermoir isolant (20) peut pivoter pour être pivoté par rapport au corps isolant (10) ; l'extrémité libre (24) est utilisable pour être mise en butée contre ou à l'écart de la partie de butée (14) du corps isolant (10), et comprend la première section isolante (242) et la deuxième section isolante (244) ; la deuxième section isolante (244) est située entre la première section isolante (242) et la section filetée externe (26) ; la couleur de la deuxième section isolante (244) est différente de la couleur de la première section isolante (242) ; et
un manchon de restriction (30) ayant une section filetée interne (32) et s'adaptant autour du fermoir isolant (20), dans lequel la section filetée interne (32) est vissée avec la section filetée externe (26) du fermoir isolant (20) ; le manchon de restriction (30) peut être actionné pour tourner, de sorte que le manchon de restriction (30) est mobile pour être déplacé dans une direction axiale (AX) du fermoir isolant (20) ;
dans lequel, lorsque l'extrémité libre (24) vient en butée contre la partie de butée (14) du corps isolant (10), et que le manchon de restriction (30) recouvre complètement la deuxième section isolante (244) et recouvre au moins une partie de la partie de butée (14) du corps isolant (10), le manchon de restriction (30) est défini comme étant situé dans une position sûre, et à ce moment, le fermoir isolant (20) ne peut pas pivoter librement ; lorsque l'extrémité libre (24) vient en butée contre la partie de butée (14) du corps isolant (10), et qu'au moins une partie de la deuxième section isolante (244) du fermoir isolant (20) est exposée via le manchon de restriction (30), le manchon de restriction (30) est défini comme étant situé dans une position d'avertissement.

5. Mousqueton isolant (1) selon la revendication 4, dans lequel, lorsque l'extrémité libre (24) vient en butée contre la partie de butée (14) du corps isolant (10), et que le manchon de restriction (30) est situé à la position d'avertissement, au moins une partie de la deuxième section isolante (244) du fermoir isolant (20) est exposée via le manchon de restriction (30), et l'extrémité libre (24) ne peut pas venir fermement en butée contre la partie de butée (14) .

6. Mousqueton isolant (1) selon la revendication 4, dans lequel, lorsque l'extrémité libre (24) vient en butée contre la partie de butée (14) du corps isolant (10), et que le manchon de restriction (30) est situé à la position d'avertissement, au moins une partie de la deuxième section isolante (244) du fermoir isolant (20) est exposée via le manchon de restriction (30), et le fermoir isolant (20) peut pivoter pour être pivoté par rapport au corps isolant (10).

7. Mousqueton isolant (1) selon la revendication 4, dans lequel le corps isolant (10) comprend un matériau noyau (11) et une couche isolante (13) ; le matériau noyau (11) est revêtu de la couche isolante (13) ; une partie du matériau noyau (11) située au niveau de la partie de butée (14) n'est pas entièrement revêtue de la couche isolante (13), de sorte qu'une partie du matériau noyau (11) située au niveau de la partie de butée (14) est exposée à l'extérieur.

8. Mousqueton isolant (1) selon la revendication 4, dans lequel le manchon de restriction (30) comprend un matériau noyau (31) et une couche isolante (35) ; le matériau noyau (31) est revêtu de la couche isolante (35) ; la couche isolante (35) a une pluralité de fentes qui sont évidées dans une surface de la couche isolante (35) et sont disposées à intervalles dans une direction annulaire entourant le matériau noyau (31).

9. Mousqueton isolant (1) selon la revendication 4, dans lequel le fermoir isolant (20) comprend un matériau noyau (21) et une couche isolante (23, 26, 22) ; le matériau noyau (21) est revêtu de la couche isolante (23, 26, 22) ; la couche isolante (23, 26, 22) comprend la première section isolante (242), la deuxième section isolante (244), la section filetée externe (26) et l'extrémité de connexion (22) dans l'ordre de l'extrémité libre (24) à l'extrémité de connexion (22) ; une partie du matériau noyau (21) correspondant à la partie de connexion (12) du corps isolant (10) est revêtue de l'extrémité de connexion (22) de la couche isolante (23, 26, 22) ; une couleur de la section filetée externe (26) et une couleur de l'extrémité de connexion (22) sont différentes de la couleur de la deuxième section isolante (244).

10. Mousqueton isolant (1) selon la revendication 9, dans lequel la couleur de la première section isolante (242) est la même que la couleur de la section filetée externe (26) et la couleur de l'extrémité de connexion (22).

11. Mousqueton isolant (1) selon la revendication 9, dans lequel la première couche isolante (23) et une partie du matériau noyau (21) correspondant à la deuxième section isolante (244) sont entièrement revêtues de la deuxième couche isolante (25).

12. Mousqueton isolant (1) selon la revendication 10, dans lequel un matériau de la première couche isolante (23) et la couleur de la première couche isolante (23) sont les mêmes qu'un matériau de la section filetée externe (26) et la couleur de la section filetée externe (26).

13. Mousqueton isolant (1) selon la revendication 4, dans lequel l'extrémité de connexion (22) de la grille isolante (20) est reliée de manière pivotante à la partie de connexion (12) du corps isolant (10) via un pivot (40), deux couvertures isolantes (42) recouvrent respectivement deux extrémités du pivot (40).

14. Mousqueton isolant (1) selon la revendication 13, dans lequel chacune des couvertures isolantes (42) comprend une rainure annulaire (422) ; chacun de deux côtés opposés de l'extrémité de connexion (22) du fermoir isolant (20) comprend un anneau en saillie (222) ; la rainure annulaire (422) de chacune des couvertures isolantes (42) correspond à l'un des anneaux en saillie (222) ; les couvertures isolantes (42) sont respectivement fixées sur les anneaux en saillie (222) de l'extrémité de connexion (22) via les rainures annulaires (422) par un procédé de soudage par ultrasons.

15. Procédé de fabrication du fermoir isolant (20) selon la revendication 1, comprenant les étapes consistant à :
fournir le matériau noyau (21) et un premier moule (50), dans lequel le matériau noyau (21) est disposé dans une première cavité de moule (52) du premier moule (50), et a une première section (212), une deuxième section (214), et une troisième section (216) ; la première cavité de moule (52) a une première zone, une deuxième zone, et une troisième zone ; la première section (212) est disposée dans la première zone ; la deuxième section (214) est disposée dans la deuxième zone ; la troisième section (216) est disposée dans la troisième zone ; former un premier espace de moulage (522) entre la première section (212) et une paroi interne de la première zone ; former un deuxième espace de moulage (524) entre la deuxième section (214) et une paroi interne de la deuxième zone ; former un troisième espace de moulage (526) entre la troisième section (216) et une paroi interne de la troisième zone, dans lequel le deuxième espace de moulage (524) communique avec le premier espace de moulage (522) et le troisième espace de moulage (526) ;
injecter un premier matériau isolant dans la première cavité de moule (52), dans lequel le premier matériau isolant remplit le premier espace de moulage (522), le deuxième espace de moulage (524) et le troisième espace de moulage (526), pour former ainsi la première couche isolante (23) sur une surface du matériau noyau (21) afin d'obtenir un produit semi-fini (21') ; le produit semi-fini (21') a une première section (212'), une deuxième section (214') et une troisième section (216') ; lorsque le produit semi-fini (21') est disposé dans une deuxième cavité de moule (62) d'un deuxième moule (60), la première section (212') et la troisième section (216') du produit semi-fini (21') viennent en butée contre une paroi interne de la deuxième cavité de moule (62), et un quatrième espace de moulage (622) est formé entre la deuxième section (214') du produit semi-fini (21') et la paroi interne de la deuxième cavité de moule (62) ; et
injecter un deuxième matériau isolant dans le quatrième espace de moulage (622), dans lequel le deuxième matériau isolant remplit le quatrième espace de moulage (622), pour former ainsi une deuxième couche isolante (25) sur une partie d'une surface du matériau noyau (21) et une partie de la première couche isolante (23) correspondant à la deuxième section (214') du produit semi-fini (21') de manière à obtenir le fermoir isolant (20).

16. Procédé selon la revendication 15, dans lequel le premier moule (50) comporte un trou d'injection (54) communiquant avec la troisième zone de la première cavité de moule (52).

17. Procédé selon la revendication 16, dans lequel le premier matériau isolant est injecté dans la troisième zone de la première cavité de moule (52) via le trou d'injection (54), et remplit séquentiellement le troisième espace de moulage (526), le deuxième espace de moulage (524), et le premier espace de moulage (522).

18. Procédé selon la revendication 15, dans lequel la première section (212) du matériau noyau (21) a une première surface extérieure ; la deuxième section (214) du matériau noyau (21) a une deuxième surface extérieure ; la troisième section (216) du matériau noyau (21) a une troisième surface extérieure ; la première surface extérieure, la troisième surface extérieure et une partie de la deuxième surface extérieure sont revêtues de la première couche isolante (23) ; une partie de la première couche isolante (23) correspondant à la deuxième section (214) du matériau noyau (21) et la totalité de la deuxième surface extérieure de la deuxième section (214) du matériau noyau (21) sont revêtues de la deuxième couche isolante (25).

19. Procédé selon la revendication 18, dans lequel la première couche isolante (23) forme une section filetée externe (26) sur la troisième surface extérieure de la troisième section (216) du matériau noyau (21).

20. Procédé selon la revendication 18, dans lequel un évidement (211) est formé sur une combinaison de la première section (212) et de la deuxième section (214) du matériau noyau (21), et a une surface interne ; au moins une partie de la surface interne de l'évidement (211) n'est pas revêtue d'au moins une de la première couche isolante (23) et de la deuxième couche isolante (25).
